**Europäisches Patentamt**

**European Patent Office**

**Office européen des brevets**

(19)

(11) Veröffentlichungsnummer : **0 228 512 B1**

(12) **EUROPÄISCHE PATENTSCHRIFT**

(45) Veröffentlichungstag der Patentschrift :
**16.01.91 Patentblatt 91/03**

(51) Int. Cl.⁵ : **B01D 46/12, B01D 46/52**

(21) Anmeldenummer : **86113531.7**

(22) Anmeldetag : **01.10.86**

(54) Filter Pack.

(30) Priorität : **05.12.85 DE 3542963**

(43) Veröffentlichungstag der Anmeldung :
**15.07.87 Patentblatt 87/29**

(45) Bekanntmachung des Hinweises auf die
Patenterteilung :
**16.01.91 Patentblatt 91/03**

(84) Benannte Vertragsstaaten :
**BE DE FR GB IT NL SE**

(56) Entgegenhaltungen :
**DE-A- 2 557 444**
**GB-B- 1 032 742**

(73) Patentinhaber :
**KERNFORSCHUNGSZENTRUM KARLSRUHE**
**GMBH**
**Weberstrasse 5 Postfach 3640**
**D-7500 Karlsruhe 1 (DE)**

(72) Erfinder : **Rüdinger, Volker, Dr.**
**Oberfeldstrasse 4**
**D-7513 Stutensee 1 (DE)**
Erfinder : **Leibold, Hans**
**Kirchgasse 4**
**D-7505 Ettlingen (DE)**
Erfinder : **Schlör, Ulrich**
**Liebigstrasse 26**
**D-6100 Darmstadt (DE)**
Erfinder : **Alken, Werner**
**Fliederstrasse 6**
**D-6940 Weinheim (DE)**

(74) Vertreter : **Gottlob, Peter**
**Kernforschungszentrum Karlsruhe GmbH**
**Stabs. Patente und Lizenzen Weberstrasse 5**
**D-7500 Karlsruhe 1 (DE)**

**Beschreibung**

Die Erfindung betrifft einen Filterpack für Luft- und/oder Flüssigkeitsfiltration mit Filtermedienflächen, die zwischen jeweils zwei Abstandshaltern angeordnet sind, wobei die Abstandshalter wellenförmig ausgebildet sind und die Kanten der Wellen jedes Abstandshalters vorzugsweise parallel zueinander verlaufen.

Ein ähnliches Filterpack ist aus der DE-OS 25 57 444 bekannt. Es besteht aus einem Durchflußgehäuse, in dem auf seinen Querschnitt abgestimmt ein Faltenfilter (Filtermedienfläche) eingesetzt wird, das aus einem Streifen besteht, der in mehreren Längenabschnitten mäanderförmig hinund hergefaltet wird. In jede einzelne Falte ist ein Faltenabstandshalter eingeschoben, der eine Vielzahl von allgemein parallelen doppelseitigen Wellungen bzw. Falten aufweist.

Die Filterung von z. B. Schwebstoffen aus Luft- bzw. Gasströmen mit sehr hohen Abscheidegraden ($\eta \geq$ 99,97%) soll jedoch auch unter extremen Betriebsbedingungen, wie erhöhte Temperatur, hohe Feuchte und hohem Differenzdruck sichergestellt sein. Die Ausbildung der Filterpacks nach dem Stand der Technik gewährleistet diese Forderung nicht, da bei ihnen bei Beanspruchung z. B. durch erhöhten Differenzdruck evtl. in Verbindung mit hoher Feuchte das Faltenfilter aufreißt und zwar insbesondere in Bogenbereichen des Mäanders der Filtermedienfläche. Untersuchungen haben nämlich ergeben, daß die Auflockerung des Filterpacks und das Aufblähen einzelner Falten zwei der wichtigsten Schadensursachen darstellen.

Dies hat seine Ursache im unkoordinierten Einbau der einzelnen gefalteten Abstandshalter, da hierdurch entweder die Kräfte aus der Vorspannung des Rahmens und/oder die Kräfte aus dem Differenzdruck bei der Durchströmung zu einem wesentlichen Teil über das Filtermedium weitergeleitet werden. Bei Erhöhung des Differenzdruckes, bei hoher Feuchte und Temperatur dehnt sich das Filtermedium nämlich bleibend aus, wodurch die Vorspannung abnimmt und das Faltenpack sich auflockert. Andererseits führt ein Überdruck zu einer Verformung des Filtermediums und zum Spiel zwischen Abstandshaltern und Filtermedium. Hierdurch wird sehr leicht eine seitliche Verschiebung der Falten ermöglicht, so daß einzelne Falten aufblähen können.

Die der Erfindung gestellte Aufgabe besteht bei einem Filterpack der e. g. Art darin, die Belastbarkeit im Hinblick auf extreme Betriebsbedingungen und- /oder die Abreinigung so zu verbessern, daß die dabei auftretenden Kräfte ausschließlich über die Abstandshalter weitergeleitet werden und die Filtermedienflächen dadurch sicher zugentlastet bleiben.

Die Lösung ist in den erfindungsgemäßen Merkmalen des Anspruches 1 beschrieben.

Die übrigen Ansprüche stellen vorteilhafte Weiterbildungen und Ausführungsformen der Erfindung dar.

Mittels des erfindungsgemäßen Vorschlages werden in besonders vorteilhafter Weise Kräfte auf die Filtermedienfläche ausschließlich über die Abstandshalter weitergeleitet, da das zwischen den Abstandshaltern angeordnete Filtermedium in den Berührungsgebieten lediglich auf Druck belastet wird. Fälle, in denen das freigespannte Filtermedium die Kanten oder Bögen der Abstandshalter trägt, sind sicher ausgeschlossen. Damit ist u. a. auch die Differenzdruckbelastbarkeit der Filterelemente in tiefer Faltung in dreifacher Weise erhöht. Die Vorspannung des Filterpacks im Rahmen bleibt erhalten, bei hohem Differenzdruck wird das Aufblähen einzelner Falten vermieden und die laterale Bewegung der Falten bleibt unterbunden. Ein weiterer Vorteil der erfindungsgemäßen Lösung besteht darin, daß mittels einer Perforation der Abstandshalter Druckanstiege verhindert bzw. ausgleichbar und eine Quervermischung oder Gewichtsverminderung erzielbar sind. Vorteilhaft ist weiterhin die Möglichkeit, mittels der randseitigen auslaufenden Ausbildung der Abstandshalter die stirnseitige Abdichtung extrem sicher ausführen zu können.

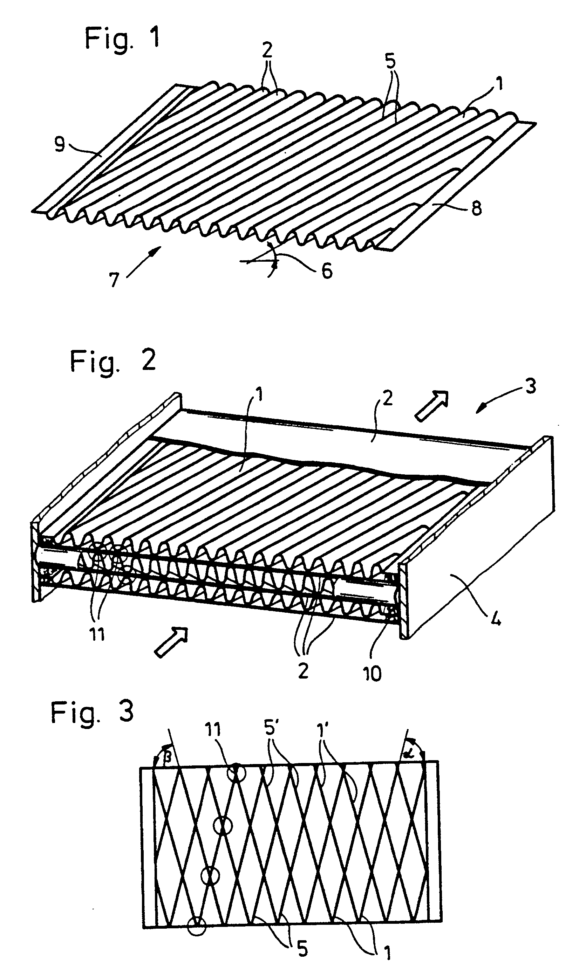

Die Erfindung wird im folgenden anhand eines Ausführungsbeispiels mittels der Figuren 1 - 3 näher beschrieben.

Die Fig. 1 (und 2) zeigt einen Abstandshalter 1, wie er zwischen den Falten 2 (Filtermedienflächen) eines Filterpacks 3 in einem stirnseitig angeströmten Gehäuse 4 von vorzugsweise quadratischem Querschnitt angeordnet wird. Bei dem Abstandshalter 1 (Fig. 1) handelt es sich um Flächen, die wellenförmig, insbesondere zick-zack-förmig ausgebildet sind. Er besteht aus einem Material ausreichender Stabilität wie z. B. aus einer Metall-Folie, aus Plastik, Papier usw. Die Fläche kann auch durchlässig z. B. durch Verwendung von Textilien oder Vliesstoffen oder durch Perforation (Löcher, Schlitze) ausgebildet sein.

Die mindestens bereichsweise parallel zueinander verlaufenden Zacken, Kanten bzw. Firste 5 des Abstandshalters 1 (die Firste 5 können selbst auch gewellt verlaufen) schließen mit der gedachten Geraden 6, die in der Stirnseite 7 quer zur Ausdehnungsebene des Abstandshalters 1 ausgerichtet ist, einen Winkel $\alpha$ (bzw. ß) von 1 - 45°, vorzugsweise von 15° ein. Die für die dichte Verbindung mit dem Gehäuse 4 vorgesehenen Kanten 8, 9 erhalten nunmehr rapportgenau einen geraden, unprofilierten Abschluß in der Breite von z. B. 2 -15 mm, wodurch das Einkleben der Abstandshalter 1 im Gehäuse vereinfacht und vor allem sehr leicht dicht ausgeführt werden kann.

In Fig. 2 sind drei Abstandshalter 1 des Filterpacks 3 der Ausführung nach Fig. 1 im Gehäuse 4 zwischen drei Lagen der Filtermedienfläche (Falten 2) dargestellt, bei dem ein Faltungsende aufgebrochen ist. Die Anströmung des Filterpacks 3 erfolgt in Pfeilrichtung. Die Verklebung der Abstandshalter 1 im Gehäuse 4 erfolgt vollständig dicht, da das Dichtmaterial 10 im fließfähigen Zustand in den Randbereichen von Gehäuse 4 zwischen alle Abstandshalter 1 und Falten 2 eindringt.

Fig. 3 zeigt einen Schnitt senkrecht zur Richtung der Luftströmung. Die Falte (Filtermedium) zwischen den beiden, diese Falte begrenzenden Abstandshaltern 1 und 1' ist der Übersichtlichkeit wegen weggelassen worden, wodurch der Verlauf der Firste 5 und 5' mit ihren Neigungswinkeln α bzw. ß ersichtlich wird. Die beiden Winkel α und ß müssen nicht gleich sein. Durch die spiegelverkehrte Anordnung der jeweils einander zugeordneten beiden Abstandshalter 1 und 1' verlaufen die Firste 5 rapportgenau an den gleichen Geometriepunkten, z. B. an den Zackenanfängen. Die Vielzahl der Kontaktstellen 11 zwischen den beiden Abstandshaltern 1 und 1' mit dem zwischenliegenden Falten 2 st durch Kreise markiert.

## Ansprüche

1. Filterpack für Luft- und/oder Flüssigkeitsfiltration mit Filtermedienflächen in Form eines Feinfilters, das in einem Gehäuse zwischen jeweils zwei Abstandshaltern angeordnet ist und abwechselnd einen Abstandshalter an- bzw. abströmseitig verdeckt, wobei die Abstandshalter wellenförmig ausgebildet sind, die Kanten der Wellen jedes Abstandshalters parallel zueinander verlaufen und die Kanten der Wellen der Abstandshalter, die auf den beiden Seiten je einer Filtermedienfläfhe angeordnet sind im Winkel zueinander verlaufen, wobei die kanten der Wellen auf den Seiten je einer Filtermedienfläche im Winkel (α bzw. β) zwisfhen 1° und 45° zueinander verlaufen, dadurch gekennzeichnet, daß rapportgenau die am Rande der Filtermedienfläche (2) für die Verbindung vorgesehenen Kanten (5, 5') einen graden, unprofilierten Abschluß (8, 9) zwischen den Filtermedienflächen (2) aufweisen, zwischen welchem und den Filtermedienflächen (2) des Faltenfilters Dichtmaterial (10) vorhanden ist, welches in fließfähigem Zustand in den Randbereichen des Gehäuses (4) eindringend die Verklebung und Abdichtung zwischen Abschlüssen (8) und Filtermedienflächen (2) sowie Gehäuse (4) bildet.

2. Filterpack nach Anspruch 1, dadurch gekennzeichnet, daß die Abstandshalter (1, 1') luft- und/oder flüssigkeitsdurchlässig ausgebildet sind.

## Claims

1. Filter pack for air and/or liquid filtration, having filter india surfaces in the form of a fine filter, which is disposed in a housing between two respective spacer menbers and alternately covers a spacer member at the inlet or outlet end, wherein the spacer members have an undulatory configuration, the edges of the undulations of each spacer member extend parallel to one another, and the edges of the undulations of the spacer members, which are disposed on the two sides of each filter india surface, extend at an angle relative to one another, the edges of the undulations on the sides of each filter india surface extending at an angle (α or β)-of between 1° and 45° relative to one another, characterised in that, to keep to an accurate pattern, the edges (5, 5'), which are provided on the edge of the filter india surface (2) for the connection, have a rectilinear, non-profiled terminating edge (8, 9) between the filter india surfaces (2), between which terminating edge and the filter india surfaces (2) of the folded filter there is provided sealing marterial (10) which, in a flowable state penetrating the edge regions of the housing (4), forms the adhesion and sealing between terminating edges (8) and filter india surfaces (2) as well as housing (4).

2. Filter pack according to claim 1, characterised in that the spacer members (1, 1') are designed to be air- and liquid-permeable.

## Revendications

1. Garniture filtrante pour filtration d'air et/ou de liquides, à surfaces de milieu filtrant sous forme d'un filtre fin qui est disposé respectivement dans deux supports d'écartement et couvre alternativement un support d'écartement du côté de l'arrivée du courant ou du côté de la sortie du courant, les supports d'écartement étant ondulés, les bords des ondulations étant parallèles à chaque support d'écartement et les bords des ondulations des supports d'écartement disposés chacun sur les deux côtés d'une surface de milieu filtrant se développant en formant un angle l'un par rapport à l'autre, les bords des ondulations sur les côtés d'une surface de milieu filtrant faisant entre eux un angle α ou β compris entre 1 et 45°, caractérisée en ce que les arêtes (5, 5') prévues pour l'assemblage en coïncidant exactement au bord de la surface de milieu filtrant (2) présentent entre les surfaces de milieu filtrant une extrémité non profilée (8, 9) entre laquelle et la surface de milieu filtrant (2) du filtre à plis est présent un matériau d'étanchéité (10) qui forme en pénétrant à l'état fluide dans la zone des bords de l'enceinte (4) le collage et l'étanchéité entre les extrémités (8) et les surfaces de milieu filtrant (2) ainsi que l'enceinte (4).

2. Garniture filtrante selon la revendication 1, caractérisée en ce que les supports d'écartement (1, 1') ont une configuration perméable à l'air et/ou aux liquides.

Fig. 1

Fig. 2

Fig. 3